Europäisches Patentamt

European Patent Office

Office européen des brevets

(11) Publication number: **0 444 821 A1**

# EUROPEAN PATENT APPLICATION

(21) Application number: 91301365.2

(51) Int. Cl.⁵: **C03C 8/02**

(22) Date of filing: **20.02.91**

(30) Priority: **28.02.90 GB 9004485**

(43) Date of publication of application:
**04.09.91 Bulletin 91/36**

(84) Designated Contracting States:
**DE ES FR GB IT NL**

(71) Applicant: **JOHNSON MATTHEY PUBLIC LIMITED COMPANY**
**78 Hatton Garden**
**London, EC1N 8JP(GB)**

(72) Inventor: **Corcilius, Heike**
**Brunnenstrasse 34**
**W-5410 Hoehr-Grenzhausen(DE)**

(74) Representative: **Wishart, Ian Carmichael et al**
**Patents Department Johnson Matthey**
**Technology Centre Blounts Court Sonning**
**Common**
**Reading, Berks RG4 9NH(GB)**

(54) **Glass composition.**

(57) A glass flux composition consisting essentially by weight of 38-50% silica, 9-17% zirconium oxide, 26-50% boron oxide, 4-15% in total of sodium oxide and/or potassium oxide, 2-8% lithium oxide, 0-15% titanium oxide, 0-15% alumina, 0-10% tin oxide, 0-10% cerium oxide (calculated as $CeO_2$), 0-10% magnesium oxide, 0-10% zinc oxide, 0-8% bismuth oxide, 0-5% calcium oxide, 0-5% lead oxide and 0-2% fluoride is useful for preparing an enamel composition especially for application to glass.

EP 0 444 821 A1

This invention relates to glass flux compositions for use in enamels.

Many different ingredients in many different concentrations in many different combinations are known in glass flux composition for use in enamels in order to provide the properties desired. These fluxes are dispersed in carrier media to make enamel compositions to decorate articles. A surprisingly useful new flux compositions has now been discovered.

Lead is widely used as a major constituent of enamels. there is concern, however, at the possibility of lead being leached into the environment. Accordingly, the invention provides a replacement which is not based on lead.

European specification 294502 A discloses a glass frit which is free from lead, cadmium, zinc and barium components, has a softening or sintering point of lower than 535° C, and consists essentially by weight of 20-40% silica, 18-45% zirconium oxide, 15-30% boron oxide, 9-15% lithium oxide, 0-3% sodium and/or potassium oxide, 0-10% titanium oxide, 0-5% aluminium oxide, zinc oxide and/or magnesium oxide and 0-3% fluoride.

United Kingdom patent specification 2154573 A discloses a lead-free, cadmium-free and zinc-free glass frit composition having a fibre softening point of about 535° C to abut 609° C consisting essentially of the following components present in the indicated aproximate weight percent ranges based on the total composition:

| Component | Weight Percent |
|---|---|
| $Al_2O_3$ | 0-30 |
| $B_2O_3$ | 16-32 |
| $SiO_2$ | 11-40 |
| $Li_2O$ | 4-12 |
| $ZrO_2$ | 0-18 |
| $SnO_2$ | 0-20 |
| $CeO_2$ | 0-2 |
| $La_2O_3$ | 0-15 |
| $CaO$ | 0-16 |
| $SrO$ | 0-13 |
| $BaO$ | 0-7 |
| $Na_2O$ | 0-3.5 |
| $F$ | 0-2.6 |

and wherein

| | | |
|---|---|---|
| $\Sigma\ SnO_2+CaO$ | is | 2-23 |
| $\Sigma\ ZrO_2+La_2O_3$ | is | 2-33 |
| $\Sigma\ ZrO_2+Al_2O_3$ | is | 0-26.5 |
| $\Sigma\ CaO+SrO+BaO$ | is | 0-19.5 |

The present invention provides a glass flux composition consisting essentially by weight of 38-50% silica, 9-17% zirconium oxide, 26-50% boron oxide, 4-15% in total of sodium oxide and/or potassium oxide, 2-8% lithium oxide, 0-15% titanium oxide, 0-15% alumina, 0-10% tin oxide, 0-10% cerium oxide (calculated as $CeO_2$), 0-10% magnesium oxide, 0-10% zinc oxide, 0-8% bismuth oxide, 0-5% calcium oxide, 0-5% lead oxide and 0-2% fluoride. Whatever the form of the cerium oxide (and in particular whether it is $CeO_2$ or $Ce_2O_3$), its content is calculated as $CeO_2$. The composition preferably comprises a frit.

The invention provides also an enamel composition comprising a dispersion in a carrier medium of the glass flux composition comprising a frit.

The invention also provides an article bearing on its surface the enamel composition which has been fired thereon.

The invention provides also, a method of applying an enamel composition to an article, which method comprises applying the present enamel composition to the article and then firing the composition.

The present glass flux and enamel compositions are low in lead or are lead-free. They are also cadmium-free. The enamel compositions are suitable for a wide range of applications. After firing, the enamel compositions have good chemical and mechanical resistance, for instance resistance to acids or alkalis, and have a particularly high gloss making them particularly attractive.

The present flux composition preferably contains 40-46% silica. Percentages herein are by weight. Its zirconium oxide content is preferably 9-15%, especially 12-15%. Its boron oxide content is preferably 27-45%, especially 27-35%, though in a particular embodiment its boron oxide content is 30-38%. Its total content of sodium oxide and/or potassium oxide is preferably 4-8%. In a particular embodiment, potassium oxide is present. The composition preferably contains 3-8% lithium oxide.

To increase the acid resistance, the flux composition preferably contains ingredient which is one or more, preferably two or three, of the titanium oxide, alumina, cerium oxide, tin oxide and calcium oxide. The composition preferably contains 2-15%, for example 5-12%, of the ingredient.

In a preferred embodiment, the flux composition contains 5-15%, especially 6-12%, titanium oxide, though in a particular embodiment the composition contains 8-15% titanium oxide. The flux composition preferably contains 0-6.5%, especially 3-4%, alumina, though in another embodiment, the composition contains 3-15%, for example 6-15%, particularly 6-10%, alumina.

The flux composition preferably contains 0-4%, particularly 2-4%, calcium oxide. It preferably contains 0-3%, particularly 2-3%, tin oxide. It preferably contains 0-5%, particularly 2-5%, of the cerium oxide.

The flux composition preferably contains 0-5% magnesium oxide and in a preferred embodiment this ingredient is not added. Likewise, the flux composition preferably contains 0-5% zinc oxide and in a preferred embodiment the ingredient is not added. Likewise again, the flux composition preferably contains 0-5% bismuth oxide and in a preferred embodiment the ingredient is not added.

To reduce or avoid problems of pollution, the present flux composition preferably contains less than 0.2% fluoride; preferably it contains no added fluoride, though it may pick up trace amounts from the surroundings. It can be seen that at most the composition contains much less lead than the usual lead-containing compositions. Preferably, the composition contains less than 1%, especially less than 0.5%, lead oxide. It is especially preferred that it contains no added lead. It may pick up trace amounts of lead from the surroundings, for example from processing on equipment previously employed to process lead-containing compositions, but preferably steps are taken to avoid this.

The flux composition can be made and used in conventional ways. It can be prepared by a process comprising admixing its ingredients. The ingredients can be introduced in the form of their oxides, or mixed oxides such as zirconium silicate or lithium aluminium silicate. Alternatively, ingredients can be introduced as compounds such as carbonates (for instance, lithium carbonate) which form the oxides during production. For instance, lithium carbonate, lithium aluminium silicate and silica can be admixed into a formulation. Conveniently, the flux composition comprises a frit, ie, a ceramic composition prepared by melting the ingredients together (for instance, at 1000-1200°C for 30-120 minutes), quenching the melt to form a glass and granulating the glass. The flux composition can consist of the frit. Alternatively, a frit of some of the ingredients can be admixed in powder form with the remainder of the ingredients to form the flux composition. Alternatively again, part of the flux composition can be incorporated while admixing a frit consisting essentially of the other ingredients with a pigment to form a composition for dispersal in a carrier medium to make an enamel composition. Yet again, part of the flux composition can be incorporated while admixing a frit consisting essentially of the other ingredients into a carrier medium to make an enamel composition.

The present flux composition, generally the frit, usually has a softening point in the range of 500-600°C. Its melting point is usually in the range of 580-720°C. Its thermal expansion is usually in the range 80-95 x $10^{-7}$/K. Its particle size depends on the intended use, but typically may be as follows for use of the enamel composition on the following types of glass:

Automotive glass: Particle Diameter
10% < 1- 2 $\mu$m
50% < 5- 6 $\mu$m
90% < 10-13 $\mu$m

Architectural and cosmetic glass:
10% < 1 - 2 $\mu$m
50% < 5.5-6.5 $\mu$m
90% < 13 - 16 $\mu$m

These values are as determined from the particle size distribution curve obtained the following conditions:
Apparatus : Laser particle sizer Malvern 3600E
Dispersing agent : 5g sodium pyrophosphate/l demineralised water
Dispersing time : 1 minute
Sample weight : 0.2 - 0.3g
Run mode : Automatic

The flux composition comprising the frit can be dispersed in a carrier material to form an enamel composition. The composition usually contains 50-85% by weight of the flux composition. The carrier material can be an aqueous or inorganic medium; it can be thermoplastic; it can be infra-red drying or ultra-violet curing; all such types of media are known and can be employed in their known ways.

The enamel composition can be used without pigment, for instance, to give an acid-etch effect on glass. Usually, however, the composition contains pigment, generally in the weight proportions of 70-90% of the flux composition and 10-30% of pigment, based on the total weight of these two ingredients. The flux composition is preferably admixed with the pigment by milling.

In preferred embodiments, the weight ratio of the total of flux composition plus any pigment: carrier material is about 4.5:1 in the case of an infra-red drying medium, about 3.1:1 in the case of an ultra-violet curing medium, and about 6.25:1 in the case of a thermoplastic medium.

The enamel composition can be used to decorate or protect an article. The composition can be applied to an article in the usual way, for instance by printing (for example, screen printing or silicon pad printing), spraying, curtain coating or hand painting. It is an advantage of the enamel composition that it can be applied in so many ways using such a variety of carrier materials as is mentioned above. The composition can be applied as a paste. After application, the composition can be fired in the usual way. Usually the firing temperature is within the range of 520-720°C; the firing time is generally up to 3 hours, usually up to 30 minutes; for instance 2-10 minutes. For example, toughened glass and laminated glass may take 2-10 minutes and beverage bottles 1.5-3 hours. In the firing cycle, the heating rate depends on the article employed; for instance, in the case of flat articles, such as flat architectural glass, automotive glass or cooker panels, heating is usually at a rate of at least 20°C, for example at least 50°C, per minute, and in the case of curved articles, such as glass bottles, a lower rate, for instance 10°C per minute, is preferred. The enamel composition can be applied for instance to ceramic ware, for example ceramic tiles. Preferably, however, it is applied to glass, for instance glass bottles (for example perfume bottles), architectural glass, for instance glass partitiions or glass tiles, or automotive glass. In a preferred embodiment, the composition is applied to cook-ware or table-ware.

The fired enamels have an outstanding combination of properties, such as resistance to acids and alkalis and visual features such as gloss, colour stability and absence of cracks. The fired enamels can be obtained in high gloss, preferably 35-48% at a 20° angle, and 85-100% at a 60° angle, of the light, as measured on the Gardner micro-tri gloss measuring apparatus.

The invention is illustrated by the following Examples, in which the amounts given in the Tables are in percent by weight.

EXAMPLE 1-3

The frits shown in Table I below were prepared by admixing the ingredients (the lithium oxide being provided in the form of lithium carbonate, and the zirconia and some of the silica being provided in the form of zirconium silicate, the remainder of the silica being provided as such), melting at 1100°C for 90 minutes, quenching and granulating.

TABLE I

| EXAMPLE | 1 | 2 | 3 |
|---------|------|------|-------|
| $ZrO_2$ | 16.0 | 13.8 | 13.15 |
| $SiO_2$ | 42.5 | 42.8 | 40.50 |
| $B_2O_3$ | 31.9 | 32.0 | 30.37 |
| $Li_2O$ | 5.3 | 6.3 | 6.07 |
| $Na_2O$ | 4.3 | 5.1 | 4.95 |
| $TiO_2$ | – | – | 4.95 |

EXAMPLES 4-9

Each of the frits of Examples 1-3 was admixed with pigment, in the weight proportions of 80 parts of frit to 20 parts of pigment, in the commercial infra-red drying medium 456-63 from Blythe Colours BV in the Netherlands, in the weight proportions of 4.5 parts of the frit/pigment mixture per part of the medium, and triple-roll milled to form an enamel composition in the form of a paste. This infra-red drying medium is a solution of propyl/methyl acrylate and butylated formaldehyde in pine oil and butanol. In Examples 4-6 the pigment was the manganese-copper-chrome-iron-nickel black pigment number 76950 from Blythe Colours BV in the Netherlands, and in Examples 7-9 the pigment was the TiO₂ white pigment number RM 461 from Blythe Colours BV in the Netherlands.

EXAMPLES 10-21

Each of the enamel compositions of Examples 4-9 was applied to glass through a 77 T-screen (which is a screen of 195 mesh), and fired for 4 minutes. In Examples 10-15 firing was at 620° C, and in Examples 16-21 at 650° C.

In each Example, the fired enamel was glossy and its colour stable. There was no difference between corresponding results achieved at the two firing temperatures. Each product was tested for acid resistance to 3% hydrochloric acid for 5 minutes and found to be reasonable, though desirably it would be better.

EXAMPLES 22-119

The procedures of Examples 1-21 were employed to prepare and use the frits shown in Table II.

### TABLE II

| Example | 22 | 23 | 24 | 25 | 26 | 27 |
|---|---|---|---|---|---|---|
| $ZrO_2$ | 14.95 | 12.07 | 12.07 | 17.10 | 13.81 | 13.94 |
| $SiO_2$ | 40.85 | 40.25 | 40.25 | 40.25 | 39.55 | 39.84 |
| $B_2O_3$ | 30.85 | 30.20 | 30.20 | 30.20 | 35.50 | 31.87 |
| $Li_2O$ | 6.27 | 6.30 | 6.30 | 7.30 | 6.21 | 6.27 |
| $Na_2O$ | 5.08 | 5.13 | 5.13 | 5.15 | 5.03 | 5.08 |
| $CaO$ | 2.00 | – | – | – | – | – |
| $Al_2O_3$ | – | 6.05 | – | – | – | – |
| $TiO_2$ | – | – | 6.04 | – | – | – |
| $SnO_2$ | – | – | – | – | – | 3.00 |

| Example | 28 | 29 | 30 | 31 | 32 |
|---|---|---|---|---|---|
| $ZrO_2$ | 14.23 | 13.49 | 12.32 | 11.95 | 14.00 |
| $SiO_2$ | 40.65 | 42.53 | 42.09 | 43.83 | 42.00 |
| $B_2O_3$ | 30.48 | 32.16 | 31.83 | 31.87 | 32.00 |
| $Li_2O$ | 6.40 | 6.54 | 6.47 | 7.27 | 7.00 |
| $Na_2O$ | 5.18 | 5.29 | 5.24 | 5.08 | 4.00 |
| $CaO$ | 1.02 | – | – | – | 1.00 |
| $SnO_2$ | 2.03 | – | – | – | – |
| $CeO_2$ | – | – | 2.05 | – | – |

| Example | 33 | 34 | 35 |
|---|---|---|---|
| $ZrO_2$ | 14.00 | 12.00 | 9.00 |
| $SiO_2$ | 41.00 | 45.00 | 40.00 |
| $B_2O_3$ | 32.00 | 30.00 | 30.00 |
| $Li_2O$ | 8.00 | 8.00 | 6.50 |
| $Na_2O$ | 5.00 | 5.00 | 3.50 |
| $TiO_2$ | – | – | 11.00 |

In each case the fired enamels showed a good gloss and good colour stability. The difference between corresponding results achieved at the two firing temperatures was small. The frits of Examples 30 and 35 gave fired enamels of greater acid resistance (tested as described above) than the fired enamels from the frits of Examples 1-3.

EXAMPLES 120-130

The flux compositions shown in Table III were prepared by admixing the frit of Example 2 with powders of the other ingredients shown.

6

## TABLE III

| Example | 120 | 121 | 122 | 123 | 124 | 125 |
|---------|-----|-----|-----|-----|-----|-----|
| $ZrO_2$ | 12.71 | 12.84 | 12.84 | 12.71 | 12.71 | 12.98 |
| $SiO_2$ | 39.08 | 39.81 | 39.81 | 39.39 | 39.39 | 40.26 |
| $B_2O_3$ | 29.31 | 29.77 | 29.77 | 29.46 | 29.46 | 30.11 |
| $Li_2O$ | 5.86 | 5.86 | 5.86 | 5.80 | 5.80 | 5.93 |
| $Na_2O$ | 4.77 | 4.75 | 4.75 | 4.69 | 4.69 | 4.80 |
| $TiO_2$ | 4.58 | – | – | 4.97 | 4.97 | – |
| $Al_2O_3$ | 3.67 | 3.98 | 3.98 | – | – | – |
| $SnO_2$ | – | 2.99 | – | 2.98 | – | 2.96 |
| $CeO_2$ | – | – | 2.99 | – | 2.98 | 2.96 |

| Example | 126 | 127 | 128 | 129 | 130 |
|---------|-----|-----|-----|-----|-----|
| $ZrO_2$ | 12.57 | 12.37 | 12.37 | 12.59 | 12.48 |
| $SiO_2$ | 38.98 | 38.04 | 38.04 | 38.73 | 38.38 |
| $B_2O_3$ | 29.14 | 28.53 | 28.53 | 29.05 | 28.78 |
| $Li_2O$ | 5.74 | 5.71 | 5.71 | 5.81 | 5.76 |
| $Na_2O$ | 4.65 | 4.64 | 4.64 | 4.73 | 4.68 |
| $TiO_2$ | 4.96 | 4.46 | 4.46 | – | 4.50 |
| $Al_2O_3$ | 3.97 | 3.57 | 3.57 | 3.64 | – |
| $SnO_2$ | – | 2.68 | – | 2.73 | 2.70 |
| $CeO_2$ | – | – | 2.68 | 2.73 | 2.70 |

EXAMPLES 131-191

The procedures of Examples 4-15 were followed using the flux compositions of Examples 120-130.

The fired enamels exhibited slightly greater acid resistance (tested as described above) than that of the fired enamels of any of the preceding Examples, but had less gloss. Best were the fired enamels stemming from the flux composition of Example 120 (which includes $TiO_2$ amd $Al_2O_3$, but the fired enamels stemming from the flux composition of Example 124 (which includes $TiO_2$ and $CeO_2$) were also good.

EXAMPLES 192-205

Frits of the composition shown in Examples 120 and 124 were prepared by the procedure of Examples 1-3, and used following the procedure of Examples 4-21. The fired enamels were acceptable.

EXAMPLES 206-226

The procedures of Examples 1-21 were employed to prepare and use the frits shown in Table IV, the magnesium oxide being provided in the form of magnesium carbonate.

## TABLE IV

| Example | 206 | 207 | 208 |
|---|---|---|---|
| $ZrO_2$ | 15.08 | 15.29 | 14.65 |
| $SiO_2$ | 40.23 | 40.78 | 39.05 |
| $B_2O_3$ | 30.18 | 30.59 | 29.29 |
| $Li_2O$ | 5.03 | 5.10 | 4.88 |
| $K_2O$ | 5.22 | 5.29 | 5.07 |
| MgO | 4.25 | – | – |
| ZnO | – | 2.95 | – |
| $Bi_2O_3$ | – | – | 5.04 |
| $TiO_2$ | – | – | 2.02 |

The fired enamels were acceptable.

EXAMPLES 227-254

The procedures of Examples 1-21 were employed to prepare and use the frits shown in Table IV.

## TABLE V

| Example | 227 | 228 | 229 | 230 |
|---|---|---|---|---|
| $ZrO_2$ | 13.80 | 14.77 | 14.36 | 14.07 |
| $SiO_2$ | 37.07 | 39.39 | 38.59 | 37.79 |
| $B_2O_3$ | 27.83 | 29.53 | 28.99 | 28.38 |
| $Li_2O$ | 4.63 | 4.91 | 4.82 | 4.72 |
| $K_2O$ | 10.74 | 5.10 | 7.07 | 9.00 |
| $TiO_2$ | 5.92 | 6.29 | 6.17 | 6.04 |

The fired enamels had good resistance to acids and alkalis, the fired enamel stemming from the frit of Example 229 being the best.

**Claims**

1. A glass flux composition consisting essentially by weight of 38-50% silica, 9-17% zirconium oxide, 26-50% boron oxide, 4-15% in total of sodium oxide and/or potassium oxide, 2-8% lithium oxide, 0-15% titanium oxide, 0-15% alumina, 0-10% tin oxide, 0-10% cerium oxide (calculated as $CeO_2$), 0-10% magnesium oxide, 0-10% zonc oxide, 0-8% bismuth oxide, 0-5% calcium oxide, 0-5% lead oxide and 0-2% fluoride.

2. A composition according to claim 1 which contains 2-15% by weight of ingredient which is one or more of the titanium oxide, alumina, cerium oxide, tin oxide and calcium oxide.

3. A composition according to claim 1 or 2 which contains 2-5% by weight of the cerium oxide.

4. A composition according to any one of claims 1-3 which contains 2-4% by weight of calcium oxide.

5. A composition according to any one of the preceding claims which contains 9-15% by weight of zirconium oxide.

6. A composition according to any one of the preceding claims which comprises a frit.

7. A process for preparing a glass flux composition claimed in any one of the preceding claims, which process comprises admixing its ingredients.

8. A process for preparing a glass flux composition claimed in claim 6, which process comprises melting its ingredients together, quenching the melt to form a glass and granulating the glass.

9. An enamel composition comprising the glass flux composition claimed in claim 6 dispersed in a carrier material.

10. A process for preparing an enamel composition claimed in claim 9, which process comprises dispersing she glass flux composition claimed in claim 6 in a carrier material.

11. An article bearing on its surface an enamel composition claimed in claim 9 which has been fired thereon.

12. A method of applying an enamel composition to an article, which method comprises applying a composition claimed in claim 9 to the article and then firing the composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 224 074 (R.F. READE)<br>* Claims; table 1; column 4, lines 8-28 *<br>– – – | 1-12 | C 03 C 8/02 |
| X | CHEMICAL ABSTRACTS, vol. 99, no. 2, 11th July 1983,<br>page 239, abstract no. 9759f, Columbus, Ohio, US;<br>& JP-A-58 150 043 (MATSUSHITA) 28-01-1983<br>* Complete abstract *<br>– – – | 1-12 | |
| X | CHEMICAL ABSTRACTS, vol. 110, no. 6, 20th March 1989,<br>page 338, abstract no. 100555t, Columbus, Ohio, US;<br>& JP-A-63 270 328 (NAKASHIMA KOGYO K.K.) 08-11-1988<br>* Complete abstract *<br>– – – – – | 1-12 | |

|  | TECHNICAL FIELDS SEARCHED (Int. Cl.5) |
|---|---|
|  | C 03 C |

The present search report has been drawn up for all claims

| Place of search | Date of completion of search | Examiner |
|---|---|---|
| The Hague | 23 May 91 | BOUTRUCHE J.P.E. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document